# EUROPEAN PATENT APPLICATION

(11) **EP 3 678 034 A1**
(43) Date of publication of application: **08.07.2020**
(21) Application number: 18851129.9
(22) Date of filing: 14.08.2018
(51) Int. Cl.: G06F 16/332

(54) **INFORMATION PROCESSING DEVICE AND INFORMATION PROCESSING METHOD**

(30) Priority: 28.08.2017 JP 2017163006
(71) Applicant: Sony Corporation, Tokyo 108-0075 (JP)
(72) Inventor: TSURUTA, Yasushi, Tokyo 108-0075 (JP); OGAWA, Hiroaki, Tokyo 108-0075 (JP); TOUYAMA, Keisuke, Tokyo 108-0075 (JP); KURIYA, Shinobu, Tokyo 108-0075 (JP); NISHIKAWA, Kana, Tokyo 108-0075 (JP); OHMURA, Junki, Tokyo 108-0075 (JP)
(74) Representative: MFG Patentanwälte Meyer-Wildhagen Meggle-Freund Gerhard PartG mbB
(86) International application number: PCT/JP2018/030251
(87) International publication number: WO 2019/044485

(57) **Abstract**

The present technology relates to an information processor and an information processing method that enable an improvement in a quality of an interactive system. An information processor is provided that includes a generating section that generates a question directed to obtaining high-order information on the basis of first-order information that is primary information, the high-order information being higher in order than the first-order information and corresponding to an answer from a user. This makes it possible to obtain information higher in order than the primary information. Such an information processor enables an improvement in the quality of the interactive system. The present technology is, for example, applicable to a voice interactive system.

## Description

### Technical Field

The present technology relates to an information processor and an information processing method. In particular, the present technology relates to an information processor and an information processing method that enable an improvement in a quality of an interactive system.

### Background Art

Studies and developments regarding wearable computers that are able to be worn and carried by a user have recently been vigorously conducted (e.g., see PTL 1).

PTL 1 discloses an on-body wearable life assisting device that provides life assistance, such as health management and personal navigation information service suitable for a state of a user, by measuring and determining a variety of conditions using a wearable device.

### Citation List

### Patent Literature

PTL 1: Japanese Unexamined Patent Application Publication No. 2001-344352

### Summary of the Invention

### Problem to be Solved by the Invention

Meanwhile, regarding use of primary information obtained from a terminal device such as a wearable device, it has been desired to obtain information higher in order than the primary information for an improvement in a quality of an interactive system.

The present technology is provided in view of such circumstances to obtain information higher in order than primary information for an improvement in a quality in an interactive system.

### Means for Solving the Problem

An information processor according to an aspect of the present technology is an information processor including a first generating section that generates a question directed to obtaining high-order information on the basis of first-order information that is primary information, the high-order information being higher in order than the first-order information and corresponding to an answer from a user.

An information processing method according to an aspect of the present technology is an information processing method for an information processor, the information processing method including generating, by the information processor, a question directed to obtaining high-order information on the basis of first-order information that is primary information, the high-order information being higher in order than the first-order information and corresponding to an answer from a user.

In the information processor and the information processing method according to the aspects of the present technology, on the basis of first-order information that is primary information, a question directed to obtaining high-order information is generated. The high-order information is higher in order than the first-order information and corresponds to an answer from a user.

The information processor according to the aspect of the present technology may be an independent device or an internal block that constitutes a single device.

### Effects of the Invention

According to the aspect of the present technology, it is possible to improve a quality of an interactive system.

It is to be noted that the effects described here are not necessarily limitative and any effect described in the present disclosure may be provided.

### Brief Description of Drawings

[FIG. 1] FIG. 1 is a block diagram that illustrates a configuration example of an embodiment of an interactive system where the present technology is applied.
[FIG. 2] FIG. 2 is a block diagram that illustrates an example of a functional configuration of the interactive system where the present technology is applied.
[FIG. 3] FIG. 3 is a diagram that illustrates a specific example of an interactive service.
[FIG. 4] FIG. 4 is a diagram that illustrates a specific example of the interactive service.
[FIG. 5] FIG. 5 is a flowchart that illustrates a flow of a process of recommendation/suggestion corresponding to high-level-information.
[FIG. 6] FIG. 6 is a flowchart that illustrates the flow of the process of recommendation/suggestion corresponding to the high-level-information.
[FIG. 7] FIG. 7 is a block diagram that illustrates a configuration example of a computer. Modes for Carrying Out the Invention
In the following, an embodiment of the present technology is described with reference to the drawings. It is to be noted that the description is made in the following order.

1. Embodiment of the Present Technology
2. Modification Examples
3. Configuration of Computer

### <1. Embodiment of the Present Technology>

### (Configuration Example of Interactive System)

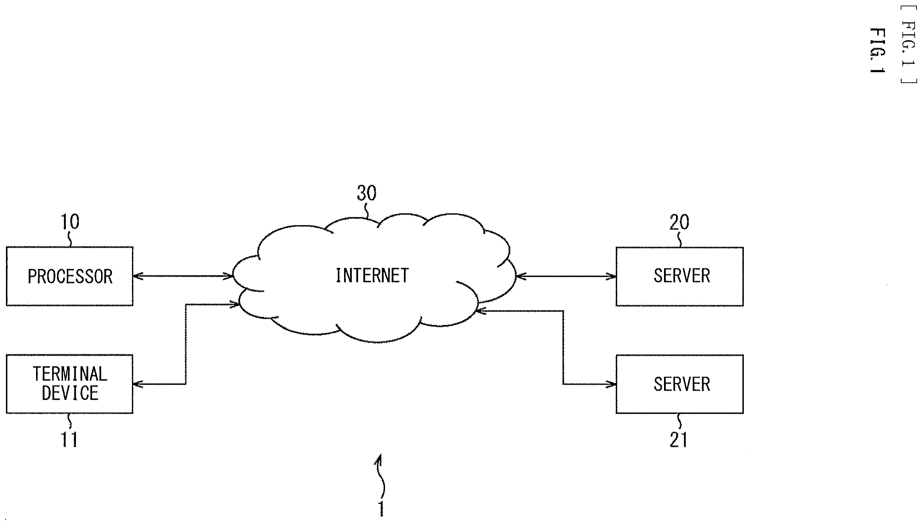

FIG. 1 is a block diagram that illustrates a configuration example of an embodiment of an interactive system where the present technology is applied.

An interactive system 1 includes a processor 10 that is installed at a local side such as a house of a user, a terminal device 11 that is worn or carried by the user, a server 20 that is installed at a cloud side such as a data center, and a server 21 that publishes a variety of information on Internet 30.

Moreover, in the interactive system 1, the processor 10, the terminal device 11, the server 20, and the server 21 are mutually couplable through the Internet 30.

The processor 10, which is, for example, a speaker couplable to a network such as a home LAN (Local Area Network), is also referred to as a smart speaker, a home agent, etc. Such a type of speaker enables not only music reproduction but also, for example, voice operation or the like of devices such as a lighting fitting and air conditioner.

It is to be noted that the processor 10 may be in the form of, for example, a mobile device, such as a smartphone or a mobile phone, an information device, such as a tablet computer or a personal computer, or the like, instead of the speaker.

The processor 10 works with the server 20 through the Internet 30, thereby not only performing a process directed to enabling an interactive service provided by the interactive system 1 but also functioning as a user interface (UI: User Interface) of the interactive service.

The terminal device 11, which is a wearable computer (wearable device) able to be worn and carried by a user, is available in a variety of types such as a wrist-type, a bracelet-type, an eyeglass-type, and a ring-type, for example. It is to be noted that the terminal device 11 may be a mobile device such as a smartphone or a mobile phone, for example, instead of the wearable device.

When worn by a user, the terminal device 11 performs sensing to obtain a variety of information regarding the user and the surroundings of the user and transmits data obtained as a result of the sensing to the server 20 through the Internet 30.

The server 20 is a dedicated server that works with the processor 10, the terminal device 11, and the server 21 through the Internet 30, performing a process corresponding to a request from the processor 10. The server 20 performs the process corresponding to the request from the processor 10 and returns an obtained process result to the processor 10 through the Internet 30.

The server 20 also receives and processes data transmitted from the terminal device 11 through the Internet 30. Furthermore, the server 20 transmits the processed data to the processor 10 through the Internet 30.

The server 21 is a typical server that publishes a variety of information on the Internet 30. As examples of public information corresponding to a request from the server 20, the server 21 returns a variety of information, such as map information, accident/incident occurrence information, and information about Web page or blog, to the server 20 through the Internet 30.

### (Functional Configuration Example of Interactive System)

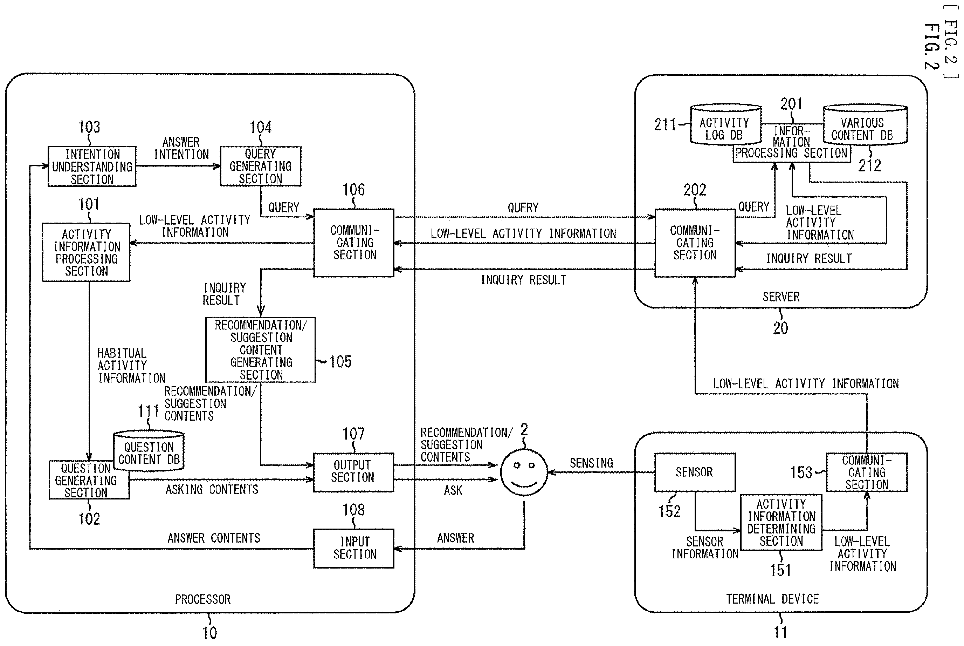

FIG. 2 is a block diagram that illustrates a functional configuration example of the interactive system where the present technology is applied.

It is to be noted that primary information (first-order information) is referred to as low-level activity information in the following description, the primary information including at least one of sensor information obtained as a result of sensing or estimation information estimated from the sensor information.

The sensor information is, for example, information detected by a variety of sensors such as a GPS sensor, a gyroscope sensor, and an acceleration sensor. Meanwhile, the estimation information is, for example, information regarding an activity of a user estimated from the sensor information, the estimation information indicating that the user is "walking", "staying", "running", "sitting", or the like.

Moreover, information (high-order information) higher in order than the first-order information such as the sensor information and the estimation information is referred to as high-level information. The high-level information is obtained in accordance with an answer of the user to a question directed to obtaining the high-order information.

For example, the high-level information is activity-related information related to the activity of the user, including at least one of activity-motivation information regarding a motivation of the user for the activity or activity-feeling information regarding a feeling of the user during the activity. For example, the activity-motivation information includes information regarding a purpose of the activity, a companion of the activity, a goal of the activity, or a purpose of performing the activity at a target location. For example, the activity-feeling information includes information regarding emotions during the activity or a thing that attracted attention during the activity.

### (Configuration Example of Processor)

FIG. 2 illustrates a functional configuration example of the processor 10.

In FIG. 2, the processor 10 includes an activity information processing section 101, a question generating section 102, an intention understanding section 103, a query generating section 104, a recommendation/suggestion content generating section 105, a communicating section 106, an output section 107, and an input section 108. The processor 10 also includes a question content DB 111 to be referred to by the question generating section 102.

The low-level activity information received from the server 20 is supplied to the activity information processing section 101 from the communicating section 106. The activity information processing section 101 determines whether or not a user 2, who wears the terminal device 11, does any habitual activity on the basis of the low-level activity information. If determining that the user 2 does a habitual activity, the activity information processing section 101 supplies habitual activity information obtained from the low-level activity information to the question generating section 102.

The question generating section 102 generates asking contents as a question directed to obtaining high-level information corresponding to an answer of the user 2 on the basis of the habitual activity information supplied from the activity information processing section 101. The question generating section 102 causes the generated asking contents to be outputted from the output section 107 and presented to the user 2.

At this regard, since the question content DB 111 stores, for example, conversation contents having been provided during a certain period of time in the past, the question generating section 102 is able to prevent the same question from being asked of the user 2 during the certain period of time by reference to the question content DB 111. Consequently, the user 2 is asked only a question not having been asked for the certain period.

The intention understanding section 103 understands (estimates) an intention of the answer of the user 2 on the basis of the information indicating answer contents (an answer to the question asked of the user 2) supplied from the input section 108. The intention understanding section 103 supplies information indicating the answer intention as understood (estimated) to the query generating section 104.

Here, it is to be noted that in a case where the answer provided by speech of the user 2 is accepted, a speech signal corresponding to the speech from the user 2 is converted to text data by performing a speech recognition process using, for example, a speech/text conversion database. The intention understanding section 103 then performs, for example, a process for converting a speech recognition result (text data of the speech) in the form of natural language to an expression understandable by a machine, etc.

The query generating section 104 generates a query directed to making an inquiry to the server 20, that is, inquiry contents directed to obtaining information useful to the user, on the basis of the information indicating the answer intention supplied from the intention understanding section 103. The query generating section 104 causes the generated query to be transmitted from the communicating section 106 to the server 20 through the Internet 30.

An inquiry result (a list of a search result in response to the query) received from the server 20 is supplied to the recommendation/suggestion content generating section 105 from the communicating section 106. On the basis of the inquiry result, the recommendation/suggestion content generating section 105 generates recommendation/suggestion contents for the user 2 (information useful to the user 2) as information to be presented to the user 2. The recommendation/suggestion content generating section 105 causes the generated recommendation/suggestion contents to be outputted from the output section 107 and presented to the user 2.

In this regard, the information to be presented to the user 2 includes recommendation information for recommending information useful to the user or suggestion information directed to suggesting information useful to the user.

It is to be noted that functions provided by the activity information processing section 101, the question generating section 102, the intention understanding section 103, the query generating section 104, and the recommendation/suggestion content generating section 105 are implemented by, for example, a program stored in a memory being executed by CPU (Central Processing Unit), microprocessor, or the like installed in the processor 10.

For example, the communicating section 106 includes a communication interface circuit, etc. The communicating section 106 accesses the server 20 coupled to the Internet 30 for exchange of a variety of data.

For example, the output section 107, which includes a speaker, outputs sound corresponding to data supplied to the speaker.

It is to be noted that instead of the speaker, the output section 107 may include, for example, any device that is able to output information corresponding to data supplied to the device, and such a device may be a display, such as a liquid crystal display or an organic EL display, a projector that projects a picture image or a video image, or the like.

For example, the input section 108, which includes a microphone, converts sound from the outside to an electric signal and outputs the electric signal to a subsequent block.

It is to be noted that instead of the microphone, the input section 108 may include, for example, a button, a keyboard, a touch panel including a touch sensor and a display unit that are integrated together, or the like to allow an operation signal corresponding to an operation by a user to be outputted to the subsequent block.

In other words, the output section 107 functions as a presenting section directed to presenting to the user 2 the question (asking contents) or the information to be presented (recommendation/suggestion contents). Meanwhile, the input section 108 functions as an accepting section that accepts the answer of the user 2 to the question (asking contents).

The question content DB 111 is stored in a storage device provided inside or outside the processor 10. For example, an HDD (Hard Disk Drive), a semiconductor memory, etc. are usable as the storage device.

### (Configuration Example of Terminal Device)

FIG. 2 also illustrates a functional configuration example of the terminal device 11.

In FIG. 2, the terminal device 11 includes an activity information determining section 151, a sensor 152, and a communicating section 153.

The sensor information is supplied to the activity information determining section 151 from the sensor 152. The activity information determining section 151 determines an activity of the user 2, such as "walking", "staying", "running", or "sitting", for example, on the basis of the sensor information.

The activity information determining section 151 causes a determination result of the activity of the user 2 to be transmitted as the low-level activity information from the communicating section 153 to the server 20 through the Internet 30. It is to be noted that the low-level activity information may be transmitted to the server 20 in association with, for example, time information indicating a time when the user 2 did the activity, location information indicating a location where the user 2 did the activity, a user ID that identifies the user 2 who did the activity, etc.

It is to be noted that the function provided by the activity information determining section 151 is implemented by, for example, executing a program stored in a memory by CPU or the like installed in the terminal device 11.

The sensor 152 includes a variety of sensors. The sensor 152 performs sensing to obtain a variety of information regarding the user 2 and the surroundings of the user 2 and supplies sensor information corresponding to the sensing result to the activity information determining section 151.

For example, the sensor 152 may include a variety sensors such as a GPS sensor that detects location information calculated from a GPS (Global Positioning System) signal or the like, a magnetic sensor that detects a magnitude or a direction of a magnetic field, an acceleration sensor that detects acceleration, a gyroscope sensor that detects an angle (attitude), an angular velocity, and an angular acceleration, or a proximity sensor that detects an nearby object.

Moreover, the sensor 152 may also include, for example, sensors directed to measuring the surrounding environment, such as a temperature sensor that detects temperature, a humidity sensor that detects humidity, and an ambient-light sensor that detects ambient luminance, in addition to an image sensor that captures an image of an object and a biosensor that detects bio-information such as fingerprint, iris, or pulse. It is to be noted that the sensor information may be detected by, for example, an external device, such as a sensor device disposed outside the terminal device 11 or a smartphone, instead of being obtained by the sensor 152 installed in the terminal device 11.

For example, the communicating section 153 includes a communication interface circuit, etc. The communicating section 153 accesses the server 20 coupled to the Internet 30 for exchange of a variety of data.

### (Configuration Example of Server)

FIG. 2 also illustrates a functional configuration example of the server 20.

In FIG. 2, the server 20 includes an information processing section 201 and a communicating section 202. The server 20 also includes an activity log DB 211 and a various content DB 212 to be referred to by the information processing section 201.

The low-level activity information received from the terminal device 11 is supplied to the information processing section 201 from the communicating section 202. The information processing section 201 stores the low-level activity information in the activity log DB 211. Moreover, the information processing section 201 causes the low-level activity information stored in the activity log DB 211 to be periodically transmitted to the processor 10 from the communicating section 202 through the Internet 30.

In this regard, since the low-level activity information is received from the terminal device 11 owned by each user (not illustrated in FIG. 2) in practice, pieces of low-level activity information regarding many users are stored in the activity log DB 211. Consequently, the processor 10 installed in a house or the like of each user likewise periodically receives the low-level activity information regarding the target user.

It is to be noted that the information processing section 201 may write the low-level activity information in the activity log DB 211 in association with the time information, the location information, the user ID, etc. Meanwhile, in reading the low-level activity information from the activity log DB 211, the information processing section 201 may simultaneously read the time information, the location information, the user ID, etc. associated with the low-level activity information.

In addition, the query received from the processor 10 is supplied to the information processing section 201 from the communicating section 202. The information processing section 201 generates a list of a search result in response to the query by using a variety of information in accordance with the inquiry contents indicated in the query, the variety of information including the information stored in the databases such as the activity log DB 211 and various content DB 212, the public information published to the server 21 on the Internet 30, etc.

In this regard, the various content DB 212 stores, as examples of the information to be presented (recommended or suggested) to the user 2 by the processor 10, a variety of contents of information regarding restaurant, cafe, music, etc. along with metadata. Moreover, the public information includes any types of information published on the Internet 30, such as map information, accident/incident occurrence information, and information about Web page or blog, for example. It is to be noted that the information processing section 201 may also use non-public information in addition to the public information.

The information processing section 201 causes the list of the search result in response to the query to be transmitted as an inquiry result to the processor 10 from the communicating section 202 through the Internet 30.

It is to be noted that the function provided by the information processing section 201 is implemented by, for example, executing a program stored in a memory by CPU or the like installed in the server 20.

For example, the communicating section 202 includes a communication interface circuit, etc. The communicating section 202 exchanges a variety of data with the processor 10, the terminal device 11, or the server 21, which is coupled to the Internet 30.

The activity log DB 211 and the various content DB 212 are stored in a storage device provided inside or outside the server 20. For example, an HDD, a semiconductor memory, etc. are usable as the storage device.

The interactive system 1 has the configuration described above.

It is to be noted that although FIG. 1 exemplarily illustrates the interactive system 1 including the single processor 10 and the single terminal device 11 for the convenience of explanation, the processor 10 and the terminal device 11 may be provided for each user, for example.

In addition, although FIG. 1 exemplarily illustrates the interactive system 1 including two servers, namely, the server 20 and the server 21, a server may be provided for each function (module), for example. For example, a serer that manages the activity log DB 211 and a serve that manages the various content DB 212 may be provided as independent servers.

Moreover, although FIG. 1 illustrates the interactive system 1 including only the single server 21 as a server that provides public information for the convenience of explanation, servers for respective pieces of public information, such as a server that provides the map information and a server that provides the accident/incident occurrence information, are provided in practice, for example.

### (Example of Interactive Service)

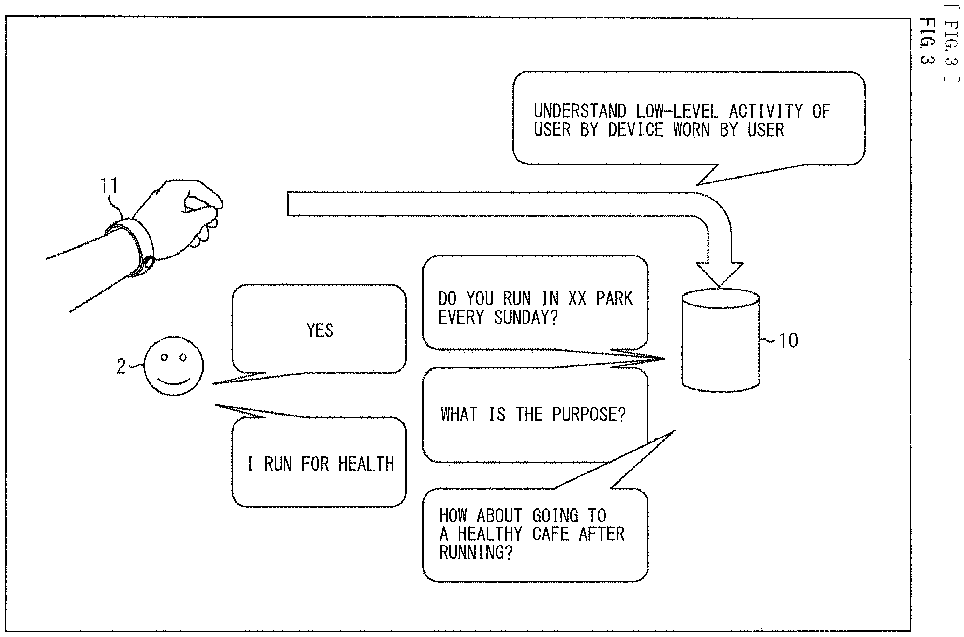

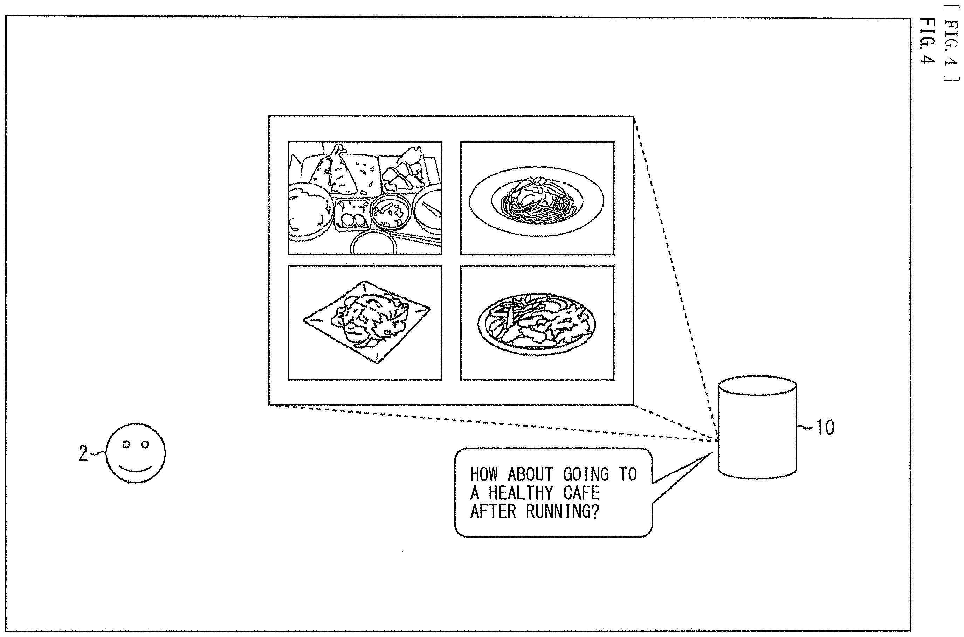

Next, referring to FIG. 3 and FIG. 4, description will be made on a specific example of the interactive service provided by the interactive system 1.

In FIG. 3, since the low-level activity information corresponding to the sensor information is obtained by the terminal device 11, that is, a device (wearable device) worn by the user 2, the processor 10 is allowed to understand a low-level activity (e.g., "walking", "running", etc.) of the user 2 on the basis of the low-level activity information.

For example, as a habitual activity of the user 2, the processor 10 recognizes that "the user 2 runs in the xx park every Sunday" on the basis of the low-level activity information. At this time, the processor 10 asks the user 2 "do you run in the xx park every Sunday?" on the basis of a recognition result of the habitual activity of the user 2.

If the user 2 answers "yes" in response to this first question, the processor 10 further asks the user 2 "what is the purpose?" as a question directed to obtaining the high-level information.

If the user 2 answers that "I run for health" in response to this second question, the processor 10 is able to obtain information corresponding to the answer from the user 2, that is, "the user 2 runs for health", as the high-level information.

The processor 10 then presents the user 2 with, for example, information useful to the user 2 (e.g., recommendation information and suggestion information), such as "a cafe that serves healthy food and drinks", on the basis of the high-level information. It is to be noted that the processor 10 is able to acquire such useful information by making an inquiry to the server 20 through the Internet 30.

Here, for example, the processor 10 projects information regarding the "cafe that serves healthy food and drinks" on a projection target, such as a screen or a wall, by a projector function while outputting speech of "how about going to a healthy cafe after running?" to the user 2 by a speaker function as illustrated in FIG. 4.

In this regard, it is possible to display, as the information regarding the cafe, information regarding name and opening hours of the cafe, menu, map indicating the store location, etc. in addition to a picture image or a video image of the cafe, for example. It is to be noted that although the information regarding the cafe is exemplarily projected by a projector in this case, the information regarding the cafe may be displayed on a display or outputted as speech from a speaker, for example.

The specific example of the interactive service is further exemplified below by seven use scenes, namely, first use scene to seventh use scene.

It is to be noted that use examples as described here are each on the assumption of a case where the purpose of the activity of the user 2, the companion of the activity of the user 2, the goal of the activity of the user 2, the purpose for the user 2 to perform the activity at the target location, the emotions of the user 2 during the activity, or the thing that attracted attention of the user 2 during the activity is obtainable as the high-level information.

### (1) First Use Scene

First, an exemplary case of asking the purpose of the activity of the user 2 will be described as the first use scene.

For example, it is assumed that the processor 10 recognizes that "the user 2 runs in a nearby park every Sunday morning" on the basis of the sensor information (low-level activity information) obtained from the sensor 152 of the terminal device 11 worn by the user 2.

At this time, the processor 10 asks the user 2 about the purpose of the activity by asking "why do you run?" In response, if the user 2 answers that, for example, "because I want to get a suntan", the processor 10 generates a search query by using information indicating an answer intention derived from answer contents of the user 2 and makes an inquiry to the server 20.

In response to a request from the processor 10, the server 20 generates and returns, for example, a list of products such as suntan creams and oils, a shop list of tanning salons located within an activity range of the user 2, or a list of running courses more suitable for getting a suntan by reference to databases such as the activity log DB 211 and the various content DB 212, the public information provided by the server 21, etc.

On the basis of an inquiry result from the server 20, the processor 10 recommends or suggests, for example, a suntan cream, a tanning salon, a running course, or the like to the user 2. The user 2 is thus allowed to obtain information more useful for getting a suntan simply by answering the question.

Meanwhile, if the user 2 answers, for example, "to drink a nice beer" in response to the question of "why do you run?", a popular beer, a restaurant where beer is available within the activity range of the user 2, or the like may be recommended.

Furthermore, if the user 2 answers, for example, "for my health" in response to the question of "why do you run?", a restaurant, a cafe, or the like that serves healthy food and drinks within the activity range of the user 2 may be recommended.

It is to be noted that in searching for a restaurant on the basis of the query from the processor 10, the server 20 may recognize whether or not the targeted restaurant is a place that "serves healthy food and drinks" by, for example, determining whether or not the targeted restaurant is provided with metadata regarding "health."

### (2) Second Use Scene

Next, an exemplary case of asking the companion of the activity of the user 2 will be described as the second use scene.

Also in this case, it is assumed that the processor 10 recognizes that "the user 2 runs in a nearby park every Sunday morning" by using the low-level activity information, for example.

At this time, the processor 10 asks the user 2 about the companion of the activity by asking "who do you run with?" In response, if the user 2 answers, for example, "with my dog", the processor 10 generates a search query for restaurants by using information indicating an answer intention derived from answer contents of the user 2 and makes an inquiry to the server 20.

In response to a request from the processor 10, the server 20 generates and returns, for example, a list of pet-friendly restaurants among restaurants located within the activity range of the user 2 by reference to databases such as the activity log DB 211 and the various content DB 212, the public information provided by the server 21, etc.

On the basis of an inquiry result from the server 20, for example, the processor 10 recommends a pet-friendly restaurant to the user 2. The user 2 is thus allowed to obtain useful information for running with a dog simply by answering the question.

It is to be noted that in searching for a pet-friendly restaurant on the basis of the query from the processor 10, the server 20 may recognize whether or not the targeted restaurant is "pet-friendly" by, for example, determining whether or not the targeted restaurant is provided with metadata regarding "pet-friendly."

Meanwhile, if the user 2 answers that, for example, "I run with my dog for his/her rehabilitation" in response to the question of "who do you run with?", a running course or the like more suitable for rehabilitation within the activity range of the user 2 may be suggested.

### (3) Third Use Scene

Next, an exemplary case of asking the goal of the activity of the user 2 will be described as the third use scene.

Also in this case, it is assumed that the processor 10 recognizes that "the user 2 runs in a nearby park every Sunday morning" by using the low-level activity information, for example.

At this time, the processor 10 asks the user 2 about the goal of the activity by asking "what kind of goal have you set?" In response, if the user 2 answers that, for example, "I want to be able to run 10 kilometers in one hour", the processor 10 generates a search query by using information indicating an answer intention derived from answer contents of the user 2 and makes an inquiry to the server 20.

In response to a request from the processor 10, the server 20 generates and returns, for example, a list of other users who have set a similar goal by reference to a database such as the activity log DB 211. Such a list of other users is obtainable, since the cloud-side server 20 manages low-level activity information regarding each user in the activity log DB 211.

On the basis of an inquiry result from the server 20, the processor 10 recommends (introduces) another user who has set a similar goal to the user 2, for example. The user 2 is thus allowed to obtain useful information for running simply by answering the question.

It is to be noted that regarding a method of introducing another user in this case, among the other users, a user whose registered information is similar to contents of the search query (e.g., a user who has made it a goal to run five kilometers in approximately 30 minutes) or a user who is similar in activity to the user 2 (e.g., a user who runs in a park in early morning on Sunday) may be recommended (introduced), for example.

### (4) Fourth Use Scene

Next, an exemplary case of asking the reason why the user 2 performs the activity at that location will be described as the fourth use scene.

Also in this case, it is assumed that the processor 10 recognizes that "the user 2 runs in a nearby park every Sunday morning" by using the low-level activity information, for example.

At this time, the processor 10 asks the user 2 about the reason to do the activity at that location by asking "why do you run there?" In response, if the user 2 answers, for example, "for safety", the processor 10 generates a search query by using information indicating an answer intention derived from answer contents of the user 2 and makes an inquiry to the server 20.

In response to a request from the processor 10, the server 20 generates and returns, for example, a list of safer running courses by reference to databases such as the activity log DB 211 and the various content DB 212 and the public information provided by the server 21.

On the basis of an inquiry result from the server 20, for example, the processor 10 recommends a safer running course to the user 2. The user 2 is thus allowed to obtain information useful for safer running simply by answering the question.

Incidentally, regarding a method of suggesting a safer running course, it is possible to suggest the safer running course by, for example, analyzing map information, accident/incident occurrence information, etc. regarding running courses obtained from the server 21 on the Internet 30.

Moreover, the running course is presented to the user 2 at this time in the form of, for example, a heat map, where a more dangerous location near the course is displayed in red while a safer area near the course is displayed in green. Such display of the areas near the course with a plurality of color levels according to safety allows the user 2 to more intuitively recognize degrees of safety.

It is to be noted that the accident/incident occurrence information regarding the running courses is available from, for example, public information published on the following websites 1 and 2, etc.
Website 1: The Metropolitan Police Department, "Crime Information Map", [Searched on August 16, 2017], the Internet <URL: http://www2.wagmap.jp/jouhomap/Portal>
Website 2: The Metropolitan Police Department, "Traffic Accident Occurrence Map" [Searched on August 16, 2017], the Internet <URL: http://www3.wagamachi-guide.com/j ikomap/>

Meanwhile, if the user 2 answers that, for example, "for a nice view" in response to the question of "why do you run there?", a running course with a nicer view, or the like within the activity range of the user 2 may be suggested. In this regard, whether or not the view is nice may be determined from, for example, the map information regarding the running courses obtained from the server 21 on the Internet 30, the number of pictures uploaded on the Internet 30 and image data of the pictures, information published on a private blog, etc.

### (5) Fifth Use Scene

Next, an exemplary case of asking the feeling or mood of the user 2 during the activity will be described as the fifth use scene.

Also in this case, it is assumed that the processor 10 recognizes that "the user 2 runs in a nearby park every Sunday morning" by using the low-level activity information, for example.

At this time, the processor 10 asks the user 2 about the feeling or mood during the activity by asking "how do you feel during running?" In response, if the user 2 answers, for example, "not fun", the processor 10 generates a search query by using information indicating an answer intention derived from answer contents of the user 2 and makes an inquiry to the server 20.

In response to a request from the processor 10, the server 20 generates and returns, for example, a list of cheerful music or a list of easier running courses by reference to databases such as the activity log DB 211 and the various content DB 212 and the public information provided by the server 21.

On the basis of an inquiry result from the server 20, for example, the processor 10 recommends cheerful music or suggests an easier running course to the user 2. The user 2 is thus allowed to obtain information useful for fun running simply by answering the question.

It is to be noted that in searching for cheerful music on the basis of the query from the processor 10, the server 20 may recognize whether or not the targeted music is "cheerful" by, for example, determining whether or not the targeted music is provided with metadata regarding "cheerful."

Meanwhile, if the user 2 answers that, for example, "it's hard" in response to the question of "how do you feel during running?", an easier running course or the like within the activity range of the user 2 may be suggested. Incidentally, regarding a method of suggesting an easier running course, it is possible to suggest a running course with a less height difference by, for example, analyzing map information, height difference information, etc. regarding running courses obtained from the server 21 on the Internet 30.

It is to be noted that the height difference information regarding running courses is available from, for example, public information published on the following website 3, etc.

Website 3: The Ministry of Land, Infrastructure, Transport and Tourism, Geospatial Information Authority of Japan, "Map of Geospatial Information Authority", [Searched on August 16, 2017], the Internet <URL: http://www.gsi.go.jp/johofukyu/hyoko_system.html>

In addition, as the running course, for example, a running course with a smaller number of mid-to-high-rise buildings therearound, a running course with no smoking area therearound (or with a smoking area therearound), etc. may be suggested by using public information such as the map information and smoking area map.

### (6) Sixth Use Scene

Next, an exemplary case of asking a thing that attracted interest of the user 2 during the activity will be described as the sixth use scene.

Also in this case, it is assumed that the processor 10 recognizes that "the user 2 runs in a nearby park every Sunday morning" by using the low-level activity information, for example.

At this time, the processor 10 asks the user 2 about a thing that attracted the interest during the activity by asking "any interesting thing during running?" In response, if the user 2 answers that, for example, "there was a queue in front of a restaurant near an exit of the part", the processor 10 generates a search query by using information indicating an answer intention derived from answer contents of the user 2 and makes an inquiry to the server 20.

In response to a request from the processor 10, the server 20 generates and returns, for example, information regarding the restaurant near the exit of the park by reference to databases such as the activity log DB 211 and the various content DB 212 and the public information provided by the server 21. It is to be noted that the information regarding the restaurant near the exit of the park is estimated from, for example, the map information, the activity information of the user, etc. at this time.

On the basis of an inquiry result from the server 20, for example, the processor 10 displays the information regarding the restaurant near the exit of the park, recommending the restaurant to the user 2. The user 2 is thus allowed to obtain useful information regarding the thing that attracted his or her attention simply by answering the question.

### (7) Seventh Use Scene

Finally, an exemplary case of asking a thing thought about by the user 2 or an idea found by the user 2 during the activity will be described as the seventh use scene.

Also in this case, it is assumed that the processor 10 recognizes that "the user 2 runs in a nearby park every Sunday morning" by using the low-level activity information, for example.

At this time, the processor 10 asks the user 2 about a thing thought about by the user 2 or an idea found by the user 2 during the activity by asking "what were you thinking during running?" In response, if the user 2 answers that, for example, "seeing the statue of Saigo-san, I was thinking about Saigo Takamori", the processor 10 generates a search query by using information indicating an answer intention derived from answer contents of the user 2 and makes an inquiry to the server 20.

In response to a request from the processor 10, the server 20 generates and returns, for example, a list of books regarding Saigo Takamori or a list of other users who were thinking about similar things by reference to databases such as the activity log DB 211 and the various content DB 212 and the public information provided by the server 21.

On the basis of an inquiry result from the server 20, for example, the processor 10 recommends a related book or recommends (introduces) another user who was thinking about a similar thing to the user 2. The user 2 is thus allowed to obtain useful information regarding the thing that attracted his or her attention simply by answering the question.

The seven use scenes are described above as the specific examples of the interactive service. As in the description of these use scenes, the interactive system 1 generates a question to obtain, as the high-level information, the activity-related information (activity-motivation information or activity-feeling information) related to the activity of the user 2 and asks the user 2, thereby being able to obtain the high-level information as desired from the answer contents of the user 2. The activity-related information may be the purpose of the activity, the companion of the activity, the goal of the activity, the purpose of performing the activity at the target location, the emotions during the activity, or the thing that attracted attention during the activity.

Moreover, by using the thus-obtained high-level information and information accompanying the high-level information, the interactive system 1 is able to present (recommend or suggest) information more useful to the user 2, such as a restaurant that serves healthy food and drinks and a more suitable running course, for example. Such useful information, which is not obtainable simply from the low-level activity information but reflects an intent of the activity of the user 2, is able to make contents of the conversation between the user 2 and the interactive system 1 deeper and, consequently, improve the quality of the interactive system 1.

### (Flow of Recommendation/Suggestion Process)

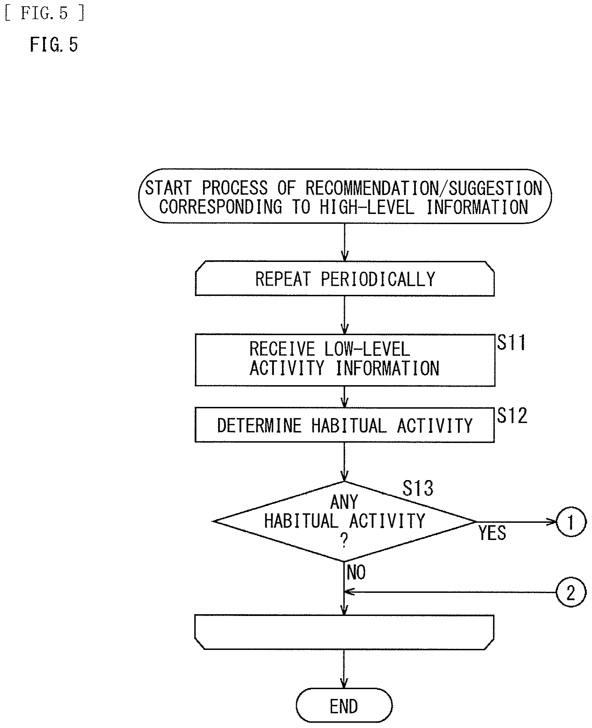

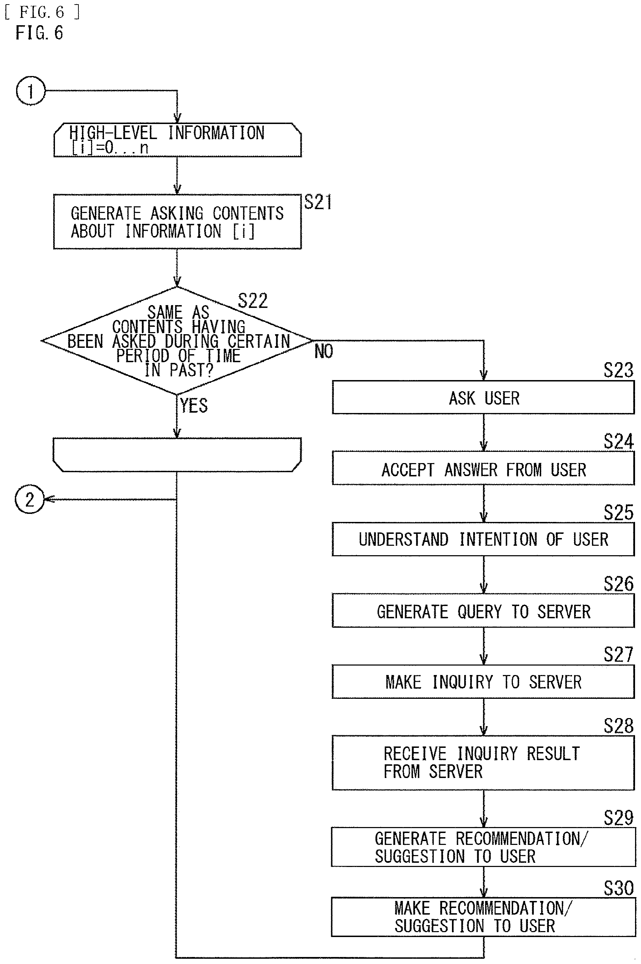

Next, referring to flowcharts of FIG. 5 and FIG. 6, description will be made on a flow of a process of recommendation/suggestion corresponding to high-level-information, which is to be performed by the processor 10 of the interactive system 1.

In Step S11, the communicating section 106 periodically receives the low-level activity information regarding the user 2, who wears the terminal device 11, from the server 20 through the Internet 30. At this time, whether or not the user is the same is determined by a user ID.

In Step S12, the activity information processing section 101 determines whether or not the user 2, who wears the terminal device 11, does any habitual activity on the basis of the low-level activity information received by the process of Step S11. Incidentally, regarding habitualness, for example, if the same activity is performed three or more times every day or the same activity is performed every week, the activity is considered habitual.

In Step S13, if the user 2 is determined not to do any habitual activity, the process flow returns to Step S11, periodically repeating Step S11 to Step S13. Meanwhile, if the user 2 is determined to do a habitual activity in Step S13, the process flow proceeds to Step S21 in FIG. 6.

In Step S21, the question generating section 102 generates the asking contents of the question to the user 2 on the basis of the habitual activity information.

In Step S22, the question generating section 102 determines whether or not the asking contents generated by the process of Step S21 match contents having been asked during the certain period of time in the past by reference to the question content DB 111.

If the asking contents are determined to match the contents having been asked during the certain period of time in the past in Step S22, the process flow returns to Step S21 and Step S21 to Step S22 are repeated.

Here, it is to be noted that in a case where, for example, there is a plurality of pieces of high-level information to acquire, a process loop (i = 0, 1, 2, ..., n) from Step S21 to Step S22 is repeated for the number of times corresponding to the number of the pieces of high-level information to acquire, thereby generating a question for each piece of high-level information to acquire.

In this regard, for example, the user 2 is to be asked for information that is not obtainable from the sensor 152 of the terminal device 11, such as the purpose, companion, and goal of the activity, and it may be determined which information is to be asked as follows, for example. In other words, for example, the conversation contents having been provided during the certain period of time in the past are stored in the question content DB 111 to prevent the same question from being asked during the certain period of time, thereby causing a question not having been asked during the certain period of time to be asked of the user 2.

Then, if the generated asking contents are determined not to match the contents having been asked during the certain period in the past in Step S22, the process flow proceeds to Step S23.

In Step S23, the output section 107 asks the user 2 on the basis of the asking contents generated by the process of Step S21.

In this regard, in a case where the processor 10 is, for example, a smart speaker or a home agent and has a speaker function and a speech synthesis function, the processor 10 asks the user 2 by speech outputted from the output section 107 in the form of a speaker. Meanwhile, in a case where the processor 10 has a display or projector function, the processor 10 asks the user 2 by a character string, an image, etc. on a UI screen outputted from the output section 107 in the form of a display or a projector.

It is to be noted that the user 2 is asked in a case where the user 2 is in the vicinity of the processor 10 installed in a house of the user or the like on the basis of the location information or the like obtained from the sensor 152 of the terminal device 11, for example. Meanwhile, in a case where the user 2 is not in the vicinity of the processor 10 installed in the house of the user or the like, the terminal device 11, such as a wearable device or a smartphone, may ask the user 2.

In Step S24, the input section 108 accepts an answer of the user 2 in response to the question asked by the process of Step S23.

In this regard, in a case where the processor 10 is, for example, a smart speaker or a home agent and has a microphone function and a speech recognition function, the user 2 answers by speech, which is accepted through the input section 108 in the form of a microphone. Meanwhile, in a case where the processor 10 has a display or projector function, the answer of the user 2 is accepted through the input section 108 in the form of a button, a keyboard, a touch panel, or the like.

In Step S25, the intention understanding section 103 understands an intention of the answer of the user 2 on the basis of information indicating answer contents of the user (an answer to the question asked of the user 2) accepted by the process of Step S24. In this regard, the answer of the user 2 is estimated by performing language processing on the answer contents of the user 2, for example.

In Step S26, the query generating section 104 generates a query directed to making an inquiry to the server 20 on the basis of information indicating the answer intention estimated by the process of Step S25. In this regard, the query contains inquiry contents directed to obtaining information useful to the user 2.

In Step S27, the communicating section 106 makes an inquiry to the server 20 by transmitting the query generated by the process of Step S26 to the server 20 through the Internet 30.

In Step S28, the communicating section 106 receives an inquiry result transmitted from the server 20 through the Internet 30.

In this regard, the server 20 receives the query transmitted by the process of Step S27 and generates a list of a search result in response to the query using a variety of information including information stored in databases such as the activity log DB 211 and the various content DB 212 and the public information published to the server 21 on the Internet 30 in accordance with the inquiry contents indicated by the query. Such a list of the search result is received as the inquiry result.

In Step S29, the recommendation/suggestion content generating section 105 generates recommendation/suggestion contents for the user 2 (information useful to the user 2) on the basis of the inquiry result received by the process of Step S28.

In Step S30, the output section 107 makes a recommendation/suggestion to the user 2 on the basis of the recommendation/suggestion contents generated by the process of Step S29.

In this regard, in a case where the processor 10 is, for example, a smart speaker or a home agent and has a speaker function and a speech synthesis function, the recommendation/suggestion to the user 2 is made by speech outputted from the output section 107 in the form of a speaker. Meanwhile, in a case where the processor 10 has a display or projector function, the recommendation/suggestion to the user 2 is made by a character string, an image, etc. on a UI screen outputted from the output section 107 in the form of a display or a projector.

At the completion of the process of Step S30, the process flow returns to Step S11 in FIG. 5 and Step S11 to Step S13 as described above are periodically repeated. If the determination process of Step S13 determines that the user 2 does a habitual activity, the process in each step illustrated in FIG. 6 is again performed.

The above is the description of the flow of the process of recommendation/suggestion corresponding to the high-level-information.

In the process of recommendation/suggestion corresponding to the high-level-information, a question directed to obtaining the high-level information is generated and asked of the user 2, thereby deriving the high-level information from an answer of the user 2 and presenting information more useful to the user 2 by using the high-level information and information accompanying the high-level information. Such useful information, which is not obtainable simply from the low-level activity information but reflects the intent of the activity of the user 2, is able to make contents of the conversation between the user 2 and the interactive system 1 deeper and, consequently, improve the quality of the interactive system 1.

### <2. Modification Examples>

It is described above that the activity information processing section 101 to the recommendation/suggestion content generating section 105 (FIG. 2) are incorporated in the processor 10 (FIG. 1), the activity information determining section 151 (FIG. 2) is incorporated in the terminal device 11 (FIG. 1), and the information processing section 201 (FIG. 2) is incorporated in the server 20 (FIG. 1). However, the activity information processing section 101 to the recommendation/suggestion content generating section 105, the activity information determining section 151, and the information processing section 201 may each be incorporated in any one of the processor 10, the terminal device 11, and the server 20.

For example, the activity information processing section 101 to the recommendation/suggestion content generating section 105, the activity information determining section 151, and the information processing section 201 may all be incorporated in the server 20, allowing the cloud-side server 20 to perform the process related to the interactive service and the local-side processor 10 to function only as a user interface for the interactive service.

Alternatively, for example, the activity information processing section 101 to the recommendation/suggestion content generating section 105, the activity information determining section 151, and the information processing section 201 may all be incorporated in the local-side processor 10, allowing the process to be completed at the local side. However, even in a case of employing such a configuration, a variety of databases such as the activity log DB 211 and the various content DB 212 may be held in a server on the Internet 30.

### <3. Configuration of Computer>

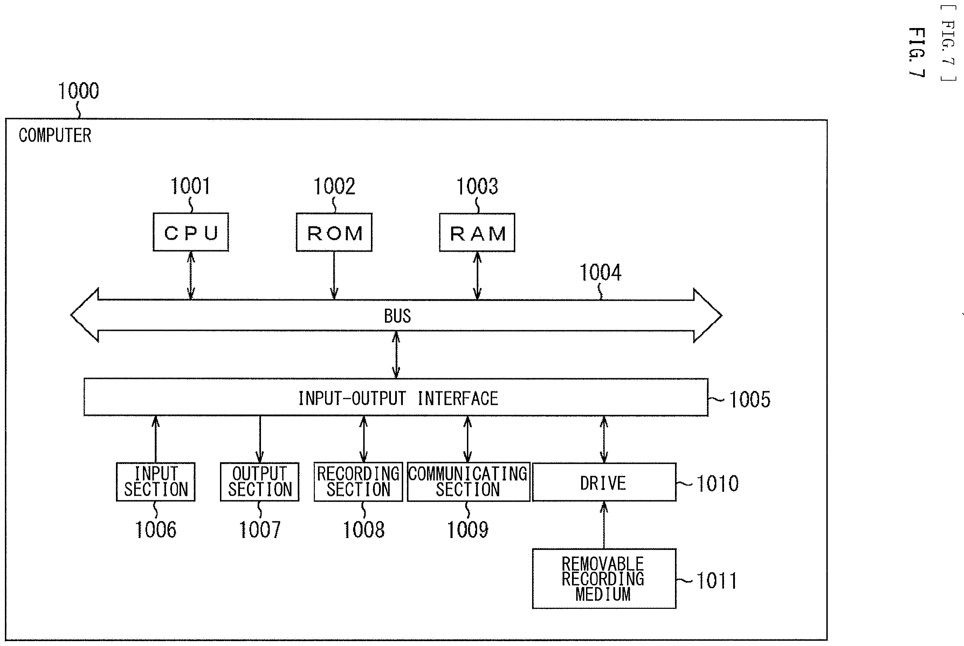

The above-described series of processes (e.g., the process of recommendation/suggestion corresponding to the high-level-information illustrated in FIG. 5 and FIG. 6) may be performed by hardware or performed by software. In a case of performing the series of processes by software, a program that constitutes the software is installed in a computer of each device. FIG. 7 is a block diagram that illustrates a configuration example of hardware of the computer that executes the above-described series of processes by the program.

In a computer 1000, a CPU (Central Processing Unit) 1001, a ROM (Read Only Memory) 1002, and a RAM (Random Access Memory) 1003 are mutually coupled through a bus 1004. The bus 1004 is also coupled to an input-output interface 1005. The input-output interface 1005 is coupled to an input section 1006, an output section 1007, a recording section 1008, a communicating section 1009, and a drive 1010.

The input section 1006 includes a keyboard, a mouse, a microphone, or the like. The output section 1007 includes a display, a speaker, or the like. The recording section 1008 includes a hard disk, a non-volatile memory, or the like. The communicating section 1009 includes a network interface or the like. The drive 1010 drives a removable recording medium 1011 such as a magnetic disk, an optical disk, a magneto-optical disk, or a semiconductor memory.

In the computer 1000 including the above components, the CPU 1001 loads a program stored in the ROM 1002 or the recording section 1008 in the RAM 1003 through the input-output interface 1005 and the bus 1004 and executes the program, thereby performing the above-described series of processes.

The program to be executed by the computer 1000 (CPU 1001) may be provided, for example, being stored in the removable recording medium 1011 in the form of a package medium or the like. Alternatively, the program may be provided through a wired or wireless transmission medium such as local area network, the Internet, or digital satellite broadcasting.

In the computer 1000, the program may be installed in the recording section 1008 through the input-output interface 1005 by loading the removable recording medium 1011 in the drive 1010. Alternatively, the program may be installed in the recording section 1008 by being received by the communicating section 1009 through the wired or wireless transmission medium. In addition, the program may be installed in advance in the ROM 1002 or the recording section 1008.

In this regard, the processes herein performed by the computer in accordance with the program are not necessarily performed chronologically in an order described as in the flowchart. In other words, the processes being performed by the computer in accordance with the program include a process being performed in parallel or individually (e.g., a parallel process or an object-based process). Moreover, the program may be processed by a single computer (processor) or may be distributed to and processed by a plurality of computers.

It is to be noted that an embodiment of the present technology is not limited to the above-described embodiment and may be modified in various ways without departing from the scope of the present technology. For example, the present technology may employ a configuration of cloud computing, where a single function is shared and processed in cooperation by a plurality of devices through a network.

Moreover, each step of the process of recommendation/suggestion corresponding to the high-level-information illustrated in FIG. 5 and FIG. 6 may be performed by a single device or shared by a plurality of devices. In addition, in a case where a single step includes a plurality of processes, the plurality of processes included in the single step may be performed by a single device or shared by a plurality of devices.

It is to be noted that the present technology may have the follow configurations.

(1) An information processor including a first generating section that generates a question directed to obtaining high-order information on the basis of first-order information that is primary information, the high-order information being higher in order than the first-order information and corresponding to an answer from a user.
(2) The information processor according to (1), in which the high-order information includes activity-related information related to an activity of the user.
(3) The information processor according to (2), in which the activity-related information includes at least one of activity-motivation information regarding a motivation of the user for the activity or activity-feeling information regarding a feeling of the user during the activity.
(4) The information processor according to (3), in which the activity-motivation information includes information regarding a purpose of the activity, a companion of the activity, a goal of the activity, or a purpose of performing the activity at a target location.
(5) The information processor according to (3) or (4), in which the activity-feeling information includes information regarding emotions during the activity or a thing that attracted attention during the activity.
(6) The information processor according to any one of (1) to (5), in which the first-order information includes at least one of sensor information obtained from a sensor or estimation information estimated from the sensor information.
(7) The information processor according to any one of (1) to (6), further including:
   a second generating section that generates information to be presented to the user on the basis of the high-order information obtained in accordance with the answer from the user to the question; and
   a presenting section that presents the information to be presented.
(8) The information processor according to (7), in which the information to be presented includes recommendation information directed to recommending information useful to the user or suggestion information directed to suggesting information useful to the user.
(9) The information processor according to any one of (1) to (8), further including a determining section that determines whether or not the user does a habitual activity on the basis of the first-order information, in which if the user is determined to do the habitual activity, the first generating section generates the question corresponding to the habitual activity of the user.
(10) The information processor according to any one of (1) to (9), further including:
   a presenting section that presents the question to the user; and
   an accepting section that accepts the answer from the user to the question.
(11) The information processor according to (10), in which the presenting section presents, among the questions, the question not having been presented for a certain period of time in the past.
(12) An information processing method for an information processor, the information processing method including generating, by the information processor, a question directed to obtaining high-order information on the basis of first-order information that is primary information, the high-order information being higher in order than the first-order information and corresponding to an answer from a user.

### Reference Signs List

- 1: interactive system
- 10: processor
- 11: terminal device
- 20: server
- 21: server
- 30: Internet
- 101: activity information processing section
- 102: question generating section
- 103: intention understanding section
- 104: query generating section
- 105: recommendation/suggestion content generating section
- 106: communicating section
- 107: output section
- 108: input section
- 111: question content DB
- 151: activity information determining section
- 152: sensor
- 153: communicating section
- 201: information processing section
- 202: communicating section
- 211: activity log DB
- 212: various content DB
- 1000: computer
- 1001: CPU

## Claims

1. An information processor comprising a first generating section that generates a question directed to obtaining high-order information on a basis of first-order information that is primary information, the high-order information being higher in order than the first-order information and corresponding to an answer from a user.

2. The information processor according to claim 1, wherein the high-order information includes activity-related information related to an activity of the user.

3. The information processor according to claim 2, wherein the activity-related information includes at least one of activity-motivation information regarding a motivation of the user for the activity or activity-feeling information regarding a feeling of the user during the activity.

4. The information processor according to claim 3, wherein the activity-motivation information includes information regarding a purpose of the activity, a companion of the activity, a goal of the activity, or a purpose of performing the activity at a target location.

5. The information processor according to claim 3, wherein the activity-feeling information includes information regarding emotions during the activity or a thing that attracted attention during the activity.

6. The information processor according to claim 1, wherein the first-order information includes at least one of sensor information obtained from a sensor or estimation information estimated from the sensor information.

7. The information processor according to claim 1, further comprising:
a second generating section that generates information to be presented to the user on a basis of the high-order information obtained in accordance with the answer from the user to the question; and
a presenting section that presents the information to be presented.

8. The information processor according to claim 7, wherein the information to be presented includes recommendation information directed to recommending information useful to the user or suggestion information directed to suggesting information useful to the user.

9. The information processor according to claim 1, further comprising a determining section that determines whether or not the user does a habitual activity on a basis of the first-order information,
wherein if the user is determined to do the habitual activity, the first generating section generates the question corresponding to the habitual activity of the user.

10. The information processor according to claim 1, further comprising:
a presenting section that presents the question to the user; and
an accepting section that accepts the answer from the user to the question.

11. The information processor according to claim 10, wherein the presenting section presents, among the questions, the question not having been presented for a certain period of time in past.

12. An information processing method for an information processor, the information processing method comprising generating, by the information processor, a question directed to obtaining high-order information on a basis of first-order information that is primary information, the high-order information being higher in order than the first-order information and corresponding to an answer from a user.
